# DEMANDE DE BREVET EUROPEEN

(11) **EP 4 585 441 A1**
(43) Date de publication de la demande: **16.07.2025**
(21) Numéro de dépôt: 24217644.4
(22) Date de dépôt: 05.12.2024
(51) Int. Cl.: B60K 6/48, B60L 15/20, B64D 31/18, B64D 35/02, B64D 35/08, B60W 20/11, B60L 7/10, B64D 35/025, B60W 20/50

(54) **PROCEDE DE PILOTAGE D'UNE INSTALLATION MOTRICE HYBRIDE POUR VEHICULE ET UNE ARCHITECTURE DE PILOTAGE D'UNE TELLE INSTALLATION MOTRICE HYBRIDE**

(30) Priorité: 08.01.2024 FR 2400147
(71) Demandeur: Airbus Helicopters, 13725 Marignane Cedex (FR)
(72) Inventeur: GAZZINO, Marc, 13012 MARSEILLE (FR); DUMUR, Guillaume, 13300 SALON DE PROVENCE (FR); LOGEAIS, Jean-François, 13009 MARSEILLE (FR); BOUDIER, Léonard, 13250 SAINT-CHAMAS (FR); JAMOT, Michel, 13100 AIX EN PROVENCE (FR); HENAFF, Mikaël, 13100 AIX EN PROVENCE (FR); CAMUS, Jérémy, 13820 ENSUES LA REDONNE (FR)
(74) Mandataire: GPI Brevets

(57) **Abrégé**

La présente invention concerne un procédé de pilotage d'une installation motrice hybride (10) d'un véhicule (1) muni d'un moteur thermique (11) et d'au moins un groupe électrique (30,40) comportant une machine électrique (31,41), une source (32,42) d'énergie électrique, et une unité de gestion de puissance (35), ledit moteur thermique (11) et ladite au moins une machine électrique (31,41) étant connectés mécaniquement à des arbres d'entrée (21,22,23) d'une boîte de transmission de puissance (20). Après acquisition de paramètres dudit au moins un groupe électrique (30,40), et réception d'un besoin en puissance mécanique dudit véhicule (1), une puissance électrique exploitable utilisable par ledit groupe électrique (30,40) et au moins une consigne de fonctionnement dudit groupe électrique (30,40) sont déterminées en fonction desdits paramètres et dudit besoin en puissance mécanique. Enfin, ledit moteur thermique (11) et ledit groupe électrique (30,40) sont commandés en fonction de ladite au moins une consigne de fonctionnement pour répondre audit besoin en puissance mécanique.

## Description

La présente invention se situe dans le domaine technique des installations motrices hybrides pour véhicule, et plus particulièrement des installations motrices hybrides pour giravion.

L'invention concerne un procédé de pilotage d'une installation motrice hybride pour la propulsion d'un véhicule ainsi qu'une architecture de pilotage d'une telle installation motrice hybride. L'invention concerne également un véhicule comportant une telle installation motrice hybride.

Un véhicule peut comporter un ou plusieurs dispositifs de déplacement entraînés en rotation par une installation motrice, éventuellement une installation motrice hybride. Par exemple, un giravion est classiquement pourvu d'un ou de plusieurs rotors susceptibles de générer une poussée. Un tel rotor peut comporter un rotor de sustentation pour assurer la sustentation, voire la propulsion du giravion. Un tel rotor peut aussi comporter un rotor auxiliaire, par exemple un rotor arrière, pour notamment s'opposer au couple en lacet exercé par le rotor de sustentation sur le fuselage du giravion et de contrôler des mouvements en lacet du giravion.

Un tel rotor peut également comporter une ou plusieurs hélices.

L'installation motrice d'un véhicule comporte généralement un ou plusieurs moteurs thermiques ainsi qu'au moins une chaîne de transmission de puissance agencée entre, d'une part, le ou les dispositifs de déplacement et, d'autre part, le ou les moteurs thermiques. On distingue notamment les giravions du type « monomoteur », dont l'installation motrice comporte un unique moteur thermique pour mettre en mouvement le ou les dispositifs de déplacement, et les giravions du type « bimoteur », dont l'installation motrice possède deux moteurs thermiques à cet effet.

Une installation motrice peut éventuellement comporter également un ou plusieurs moteurs électriques pour entraîner le ou les dispositifs de déplacement. Une installation motrice comportant au moins un moteur thermique et au moins un moteur électrique est généralement désignée par l'expression « installation motrice hybride ». Une installation motrice hybride comporte également une ou plusieurs sources d'énergie électrique, telles qu'une batterie, une super capacité ou une pile à combustible par exemple, afin d'alimenter en énergie électrique chaque moteur électrique. Certaines sources d'énergie électrique peuvent comprendre des dispositifs de stockage d'énergie électrique rechargeables.

Un moteur électrique peut être implanté de différentes façons au sein d'une installation motrice hybride.

Un moteur électrique peut notamment être connecté à une chaîne de transmission de puissance de l'installation motrice hybride. Un tel moteur électrique peut être relié, par exemple, à une entrée spécifique d'une boîte de transmission de puissance, ou encore à une sortie de la boîte de transmission de puissance, par exemple entre la boîte de transmission de puissance et un rotor du giravion, de préférence le rotor de sustentation.

En outre, un moteur électrique d'une installation motrice hybride peut être utilisé uniquement en mode moteur afin de transformer une énergie électrique en énergie mécanique pour entraîner en rotation chaque rotor. Un moteur électrique peut aussi être une machine électrique réversible combinant le mode moteur avec un mode générateur afin de transformer une énergie mécanique en énergie électrique pour recharger une source d'énergie électrique rechargeable ou pour fournir cette énergie électrique à un réseau électrique de bord du giravion.

Il est à noter que l'expression « moteur thermique » désigne par commodité dans l'ensemble du texte tout moteur thermique pouvant être utilisé dans une telle installation motrice pour giravion, par exemple des turbomoteurs ou encore des moteurs à pistons. L'expression « moteur thermique » est à opposer aux expressions « moteur électrique » ou « machine électrique » qualifiant les moteurs mus par une énergie électrique.

Selon le fonctionnement de l'installation motrice hybride, les moteurs thermiques et les moteurs électriques peuvent être utilisés indépendamment ou bien en combinaison, simultanément ou séquentiellement.

Le document FR 2961767 décrit un procédé de pilotage d'une installation motrice hybride d'un véhicule comportant un unique moteur thermique et un moteur électrique. Lors de phases de fonctionnement exigeantes, par exemple des phases d'ascension, ou de vol à hautes altitudes, ce procédé permet de réduire, voire d'interrompre, la recharge d'une batterie électrique afin de maximiser la puissance fournie par l'installation motrice hybride, à savoir fournie conjointement par son moteur thermique et son moteur électrique, pour la propulsion du véhicule.

En outre, un giravion dont l'installation motrice comporte un unique moteur thermique est soumis à certaines restrictions pour anticiper des risques consécutifs à une panne de cet unique moteur thermique. Le survol de certaines zones urbaines peut, par exemple, être interdit à un giravion dont l'installation motrice comporte un unique moteur thermique, et autorisé pour un giravion dont l'installation motrice comporte au moins deux moteurs thermiques.

Le document FR 2952907 décrit une installation motrice hybride comportant un unique moteur thermique, une boîte de transmission principale destinée à entraîner un rotor principal et une boîte de transmission arrière destinée à entraîner un rotor auxiliaire. Un premier moteur électrique est connecté mécaniquement à la boîte de transmission principale et un deuxième moteur électrique est connecté mécaniquement à la boîte de transmission arrière. Les moteurs électriques permettent d'une part d'apporter une énergie mécanique complémentaire au moteur thermique en vol et, d'autre part, de pallier une panne du moteur thermique pour permettre le vol pendant une durée limitée du giravion. Les moteurs électriques peuvent également fonctionner en mode générateur pour transformer une énergie mécanique fournie par le moteur thermique en une énergie électrique qui est alors stockée dans une ou plusieurs batteries électriques. Ces moteurs électriques permettent ainsi de limiter la puissance de chaque moteur thermique installé en intervenant lors de phases de vol exigeantes.

Le document FR 3023989 concerne une architecture électrique d'un aéronef comportant au moins un rotor de sustentation entraîné en rotation par au moins un moteur thermique via une boîte de transmission mécanique, ainsi qu'une machine électrique principale reliée directement au moteur thermique, une machine électrique secondaire reliée à une boîte de transmission mécanique et au moins une source électrique. Cette architecture électrique est munie d'un convertisseur multifonction comprenant un superviseur contrôlant le moteur thermique et pilotant l'architecture électrique pour alimenter électriquement au moins une machine électrique et/ou pour prélever de l'énergie électrique à partir d'au moins une des machines électriques en fonction de phases de fonctionnement de l'aéronef.

Le document FR 3114077 décrit un procédé de gestion d'une installation motrice hybride pour la propulsion d'un giravion, l'installation motrice hybride comportant un ou plusieurs moteurs thermiques, une ou plusieurs machines électriques et une source d'énergie électrique. Le procédé comporte une acquisition d'une ou de plusieurs caractéristiques de la source d'énergie électrique et/ou des machines électriques, une détermination d'un besoin en puissance mécanique du giravion, et une détermination d'une répartition de puissance entre les moteurs thermiques et les machines électriques, en fonction des caractéristiques de la source d'énergie électrique et/ou des machines électriques et du besoin en puissance mécanique du giravion. Enfin, les moteurs thermiques et les machines électriques sont commandés selon plusieurs modes de fonctionnement, afin de recharger la source d'énergie électrique, d'apporter une puissance mécanique complémentaire à celle du ou des moteurs thermiques, voire de pallier la panne d'un moteur thermique.

Le document WO 2016/049027 décrit un procédé de commande d'un système d'entraînement hybride pour un rotor d'un aéronef comprenant au moins un moteur thermique, au moins un moteur électrique et une source d'énergie électrique. Selon ce procédé, un contrôleur pilote le moteur thermique et le moteur électrique en fonction d'une demande de puissance à fournir au rotor de sorte que les moteurs thermiques et électriques fournissent conjointement la puissance demandée pour entraîner le rotor. Ce système d'entraînement hybride permet ainsi de fournir une puissance supplémentaire pendant une durée limitée, notamment lors d'une phase d'urgence ou lors de phases de vol dangereuses ou exigeantes.

Par ailleurs, les documents US 2003/0001391, EP 3945035, FR 3126533, EP 3034834, et US 2017/0341518 sont également connus. Enfin, l'arrière-plan technologique de l'invention comporte les documents FR 3117450, FR 3000468, FR 2962404, FR 3130253, US 2017/0174355 et FR 3094314.

La présente invention a alors pour but de proposer une solution alternative pour le pilotage d'une installation motrice hybride munie d'un unique moteur thermique pour véhicule afin d'une part d'améliorer la gestion des énergies et d'autre part d'assurer une supervision de la partie électrique de cette installation motrice hybride.

La présente invention concerne tout d'abord un procédé de pilotage d'une installation motrice hybride pour la propulsion d'un véhicule, ce véhicule comportant :
- une installation motrice hybride munie d'un unique moteur thermique, d'une boîte de transmission de puissance, d'un contrôleur dudit moteur thermique, d'au moins un groupe électrique et d'une unité de gestion de puissance, ledit au moins un groupe électrique comprenant une machine électrique, une source d'énergie électrique, un dispositif de commande de la machine électrique relié électriquement à la machine électrique, et à la source d'énergie électrique, ainsi que des capteurs, le moteur thermique et ledit au moins un groupe électrique étant connectés mécaniquement respectivement à des arbres d'entrée de la boîte de transmission de puissance, et
- un dispositif de déplacement connecté par une chaîne de transmission mécanique à un arbre de sortie de la boîte de transmission de puissance.

Le procédé selon l'invention est remarquable en ce qu'il comporte les étapes suivantes :
- acquisition d'au moins un paramètre dudit au moins un groupe électrique par l'intermédiaire des capteurs,
- réception d'un besoin en puissance mécanique du véhicule par l'unité de gestion de puissance,
- détermination d'une puissance électrique exploitable pouvant être utilisée par ledit au moins un groupe électrique, en fonction dudit au moins un paramètre et du besoin en puissance mécanique du véhicule,
- établissement d'au moins une consigne de fonctionnement pour ledit au moins un groupe électrique par l'unité de gestion de puissance, en fonction de la puissance électrique exploitable, dudit au moins un paramètre et du besoin en puissance mécanique, et
- commande du moteur thermique et dudit au moins un groupe électrique par l'intermédiaire respectivement du contrôleur et du dispositif de commande, en fonction de ladite au moins une consigne de fonctionnement, de la puissance exploitable, dudit au moins un paramètre et du besoin en puissance mécanique.

De la sorte, le procédé selon l'invention permet le pilotage de l'installation motrice hybride, et en particulier de la ou des machines électriques, en fonction d'un ou de plusieurs paramètres dudit au moins un groupe électrique afin d'optimiser la gestion de l'énergie électrique de ce groupe électrique.

Le véhicule peut être par exemple un aéronef, dont le dispositif de déplacement est muni d'au moins un rotor, tel un rotor de sustentation ou une hélice, voire un rotor auxiliaire. Le dispositif de déplacement est entraîné en rotation par l'installation motrice hybride.

L'installation motrice hybride comporte un unique moteur thermique et un contrôleur permettant de commander et de surveiller le moteur thermique. Le contrôleur peut ainsi déterminer ou estimer des paramètres de fonctionnement du moteur thermique. Le contrôleur est par exemple un calculateur moteur de type *EECU* pour la désignation en langue anglaise « Electronic Engine Control Unit » ou de type *FADEC* pour la désignation en langue anglaise « Full Authority Digital Engine Control ».

L'installation motrice hybride comporte un ou plusieurs groupes électriques comprenant chacun une machine électrique, une source d'énergie électrique, comprenant par exemple un ou plusieurs dispositifs de stockage d'énergie électrique rechargeables, et un dispositif de commande relié électriquement à la machine électrique et à la source d'énergie électrique.

Un groupe électrique comporte également des capteurs destinés à surveiller la source d'énergie électrique et la machine électrique. Les capteurs permettent de mesurer un ou plusieurs paramètres ou caractéristiques du groupe électrique, dont au moins une première caractéristique de la source d'énergie électrique et au moins une deuxième caractéristique de la machine électrique du groupe électrique.

Le dispositif de commande permet de commander et de surveiller la machine électrique. Le dispositif de commande est, par exemple, relié électriquement à la machine électrique et à la source d'énergie électrique et peut être positionné entre, d'une part, la machine électrique et, d'autre part, la source d'énergie électrique.

L'unité de gestion de puissance est reliée au dispositif de commande relatif à la machine électrique du ou des groupes électriques, aux capteurs de ce ou ces groupes électriques ainsi qu'au contrôleur du moteur thermique, par des liaisons filaires ou sans fil. En cas de plusieurs groupes électriques, l'unité de gestion de puissance permet de répartir le besoin de puissance globale entre les différents groupes électriques, et, par suite, entre les différentes machines électriques.

L'unité de gestion de puissance peut être dédiée à la gestion de l'installation motrice hybride. Alternativement, l'unité de gestion de puissance peut être partagé pour réaliser d'autres fonctions du véhicule.

L'unité de gestion de puissance peut comporter un calculateur dédié à la réalisation du procédé selon l'invention. Ce calculateur est relié, par des liaisons filaires ou sans fil, au dispositif de commande de la ou des machines électriques du ou des groupes électriques, aux capteurs de ce ou ces groupes électriques ainsi qu'au contrôleur du moteur thermique. Le calculateur peut ainsi recevoir des informations d'état des paramètres de fonctionnement du moteur thermique et un ou plusieurs paramètres du ou des groupes électriques afin de piloter, voire d'optimiser, le fonctionnement de l'installation motrice hybride.

La machine électrique d'un groupe électrique peut fonctionner en mode moteur pour transmettre une énergie mécanique à l'arbre d'entrée de la boîte de transmission de puissance et en mode générateur pour fournir une énergie électrique destinée à recharger la source d'énergie électrique de l'installation motrice hybride, et éventuellement à alimenter un réseau de bord du véhicule.

La boîte de transmission de puissance est connectée mécaniquement, d'une part, au moteur thermique et au ou aux groupes électriques, via respectivement des arbres d'entrée, et, d'autre part, au dispositif de déplacement par l'intermédiaire d'un arbre de sortie et d'une chaîne de transmission mécanique.

De la sorte, dans le cadre du procédé selon l'invention, après à l'acquisition d'au moins un paramètre dudit au moins un groupe électrique par l'intermédiaire des capteurs, l'unité de gestion de puissance reçoit un besoin en puissance mécanique du véhicule. Ce besoin en puissance mécanique est par exemple défini et émis par un dispositif, éventuellement dédié à cet effet, du véhicule, comprenant notamment un calculateur.

Ce besoin en puissance mécanique est, par exemple, déterminé de façon usuelle par un calculateur du véhicule, en fonction de caractéristiques du véhicule, telles que sa masse, sa vitesse d'avancement et la position d'un ou de plusieurs leviers ou poignées de commande notamment. Dans le cas d'un aéronef, ces caractéristiques du véhicule peuvent également comprendre son altitude, sa vitesse verticale, et/ou la position d'un levier de commande du pas collectif, voire de pas cyclique, des pales d'un rotor de l'aéronef.

Le ou les paramètres dudit au moins un groupe électrique comportent au moins une première caractéristique de la source d'énergie électrique du groupe électrique et/ou au moins une deuxième caractéristique de la machine électrique du groupe électrique. Ladite au moins une première caractéristique peut être choisie par exemple parmi un niveau de charge, une température, et un vieillissement de la source d'énergie électrique. Ladite au moins une seconde caractéristique peut être choisie parmi une température et un couple moteur de la machine électrique.

Ensuite, une puissance électrique exploitable pouvant être utilisée par ledit au moins un groupe électrique est déterminée par le calculateur, en fonction dudit au moins un paramètre et du besoin en puissance mécanique du véhicule. Cette puissance électrique exploitable peut être positive, la machine électrique du groupe électrique générant alors une puissance mécanique à l'aide de l'énergie électrique fournie par la source d'énergie électrique afin d'entraîner en rotation le dispositif de déplacement, via la boîte de transmission de puissance. Alternativement, cette puissance électrique exploitable peut être négative, la machine électrique du groupe électrique générant alors une puissance électrique à l'aide de l'énergie mécanique fournie par la boîte de transmission de puissance afin de recharger électriquement la source d'énergie électrique, ou d'alimenter électriquement d'autres consommateurs électriques du véhicule.

La puissance électrique exploitable par un groupe électrique est liée à l'état des composants de ce groupe électrique, à savoir à au moins une première caractéristique de la source d'énergie électrique et/ou à au moins une deuxième caractéristique de la machine électrique de ce groupe électrique. La puissance électrique exploitable par un groupe électrique est donc déterminée en fonction d'un ou de plusieurs paramètres de ce groupe électrique.

Par exemple, la puissance électrique exploitable est liée au niveau de charge et la température de la source d'énergie électrique. En effet, si la source d'énergie électrique est une batterie chargée de façon significative et que sa température est inférieure à un seuil prédéterminé, alors la source d'énergie électrique peut délivrer un premier niveau de puissance important. Lorsque son niveau de charge diminue, la tension électrique délivrée par cette source d'énergie électrique diminue jusqu'à atteindre une limite minimale de tension, la puissance électrique exploitable étant alors limitée également. En outre, lorsque la batterie fournit une forte puissance électrique, sa température augmente et peut arriver à une limite maximale au-delà de laquelle la durée de vie est impactée, voire également sa sécurité, avec un risque d'emballement thermique.

Pour la machine électrique, c'est principalement sa température qui influe sur la puissance électrique exploitable en fonction d'un couple maximum délivrable par la machine électrique.

Par la suite, au moins une consigne de fonctionnement pour ledit au moins un groupe électrique est établie par l'unité de gestion de puissance, en fonction de cette puissance électrique exploitable, dudit au moins un paramètre et du besoin en puissance mécanique du véhicule. Cette ou ces consignes de fonctionnement permettent ainsi de définir les conditions de fonctionnement de la machine électrique et de la source d'énergie électrique afin que ledit au moins un groupe électrique développe cette puissance électrique exploitable. Cette ou ces consignes de fonctionnement peuvent également influer sur le fonctionnement du moteur thermique lorsque ledit au moins un groupe électrique développe cette puissance électrique exploitable.

Enfin, le moteur thermique et ledit au moins un groupe électrique sont commandés respectivement par le contrôleur et le dispositif de commande, en fonction de ladite au moins une consigne de fonctionnement, dudit au moins un paramètre, et du besoin en puissance mécanique de sorte que ledit au moins un groupe électrique développe la puissance électrique exploitable et, par suite, que l'installation motrice hybride développe une puissance mécanique répondant au besoin en puissance du véhicule.

De la sorte, le procédé selon l'invention permet de piloter l'installation motrice hybride afin d'assurer la propulsion du véhicule en optimisant l'utilisation de chaque source d'énergie électrique tout en assurant avantageusement une supervision dudit au moins un groupe électrique, et en particulier de la source d'énergie électrique et de la machine électrique dudit au moins un groupe électrique.

Le procédé selon l'invention peut de plus comprendre une ou plusieurs des caractéristiques qui suivent, prises seules ou en combinaison.

Selon une possibilité, lorsque la puissance électrique exploitable est négative, la commande peut comporter une étape de recharge électrique de la source d'énergie électrique, avec un courant électrique de recharge généré par la machine électrique, la machine électrique étant entraînée en rotation par l'arbre d'entrée de la boîte de transmission de puissance. Ladite au moins une consigne de fonctionnement comporte dans ce cas une consigne d'intensité électrique maximale de recharge pour le courant électrique de recharge alimentant la source d'énergie électrique.

De la sorte, le procédé selon l'invention permet de s'assurer que le courant électrique de recharge est compatible avec le besoin en puissance mécanique du véhicule, le moteur thermique devant par exemple fournir une puissance mécanique suffisante, d'une part, pour répondre à ce besoin en puissance mécanique et, d'autre part, pour permettre à la machine électrique de délivrer le courant électrique de recharge.

Cette consigne d'intensité électrique maximale de recharge peut également être établie en fonction d'une consommation de courant électrique par le véhicule. Cette consommation de courant électrique est effectuée par un ou plusieurs équipements du véhicule. Ce courant électrique est fourni par ledit au moins un groupe électrique, et dans le cas présent par la machine électrique, et circule jusqu'aux équipements du véhicule, via un réseau de bord du véhicule.

De plus, le procédé peut comporter une vérification par l'unité de gestion de puissance que la consigne d'intensité électrique maximale de recharge est compatible avec ledit au moins un paramètre du groupe électrique. Par exemple, l'unité de gestion de puissance vérifie que la source d'énergie électrique peut recevoir, ou que la machine électrique peut délivrer, un courant électrique conforme à cette consigne d'intensité électrique maximale de recharge sans risque de dégradation.

Dans ce but, l'unité de gestion de puissance peut mesurer la valeur de l'intensité électrique du courant électrique délivrée par la machine électrique par un capteur dédié et la comparer avec un seuil prédéterminé. Ensuite, l'unité de gestion de puissance peut déterminer la puissance électrique délivrée en multipliant cette valeur de l'intensité électrique avec la tension électrique aux bornes de la machine électrique. La puissance mécanique fournit à la machine électrique peut enfin être déterminée en prenant en compte le rendement de cette machine électrique. De plus, ce seuil prédéterminé peut être variable et lié par exemple au niveau de charge de la source d'énergie électrique, pour notamment éviter de la surcharger, ou encore à sa température. En effet, si la température de la source d'énergie électrique est élevée, voire trop élevée, il faut limiter l'intensité électrique du courant électrique de charge pour éviter une élévation supplémentaire de la température interne de la source d'énergie électrique.

De plus, lorsque cette consigne d'intensité électrique maximale de recharge est incompatible avec ledit au moins un paramètre, une limitation de cette consigne d'intensité électrique maximale de recharge peut être effectuée par l'unité de gestion de puissance. Cette consigne d'intensité électrique maximale de recharge est incompatible avec ledit au moins un paramètre lorsque, par exemple, cette consigne d'intensité électrique maximale de recharge est supérieure à la valeur maximale de l'intensité électrique de recharge admissible par cette source d'énergie électrique.

Cette consigne d'intensité électrique maximale de recharge est aussi incompatible avec ledit au moins un paramètre lorsque l'intensité électrique du courant électrique utilisé pour recharger la source d'énergie électrique permet à l'installation motrice hybride de générer au niveau de la boîte de transmission de puissance une puissance mécanique supérieure à une consigne de puissance admissible par cette boîte de transmission de puissance.

En outre, ledit procédé peut aussi comporter les étapes complémentaires suivantes :
i. première détermination, par l'unité de gestion de puissance dudit au moins un groupe électrique, d'une valeur limite de puissance mécanique admissible par la machine électrique dudit au moins un groupe électrique en fonction de la consigne d'intensité électrique maximale de recharge,
ii. seconde détermination, par l'unité de gestion de puissance, d'une valeur de puissance mécanique de charge instantanée que doit générer le moteur thermique en fonction de la valeur limite de puissance mécanique admissible et du besoin en puissance du véhicule, et
iii. transmission, par l'unité de gestion de puissance, au contrôleur du moteur thermique de la valeur de puissance mécanique de charge instantanée que doit générer le moteur thermique.

De la sorte, le contrôleur peut avantageusement piloter le moteur thermique pour qu'il fournisse la puissance mécanique totale suffisante afin de générer, d'une part, une puissance mécanique de déplacement transmise au dispositif de déplacement pour répondre au besoin en puissance mécanique du véhicule et, d'autre part, la puissance mécanique de charge instantanée transmise à la machine électrique pour délivrer le courant électrique de recharge vers la source d'énergie électrique.

Selon une autre possibilité compatible avec les précédentes, lorsque ladite puissance électrique exploitable est positive, la commande peut comporter une étape de génération d'une puissance mécanique d'entraînement par ledit au moins un groupe électrique, la machine électrique dudit au moins un groupe électrique étant alimentée électriquement par la source d'énergie électrique dudit au moins un groupe électrique, et ladite au moins une consigne de fonctionnement pour ledit au moins un groupe électrique comporte une consigne de couple pour ladite machine électrique.

Dans ce cas, la machine électrique délivre un couple conforme à la consigne de couple afin de fournir la puissance mécanique d'entraînement à la boîte de transmission de puissance, et, par suite, au dispositif de déplacement.

Cette puissance mécanique d'entraînement peut être fournie en complément d'une puissance mécanique fournie par le moteur thermique afin que la machine électrique et le moteur thermique entraînent conjointement en rotation l'arbre de sortie de la boîte de transmission de puissance. Ce complément de puissance constitué par la puissance mécanique d'entraînement améliore ainsi les performances de l'installation motrice hybride, pour par exemple que le véhicule réalise une manoeuvre exigeante, réduise sa consommation de carburant ou limite l'émission de nuisances sonores ou de gaz d'échappement.

Cette puissance mécanique d'entraînement peut également être fournie pour pallier une panne du moteur thermique afin de permettre au véhicule de poursuivre sa route, pour par exemple atteindre une aire d'atterrissage en sécurité lorsque le véhicule est un aéronef.

Par ailleurs, la consigne de couple peut également être établie en fonction d'une consommation de courant électrique par le véhicule. Cette consommation de courant électrique est effectuée par un ou plusieurs équipements du véhicule. Ce courant électrique est fourni par ledit au moins un groupe électrique, et dans le cas présent par la source d'énergie électrique, et circule jusqu'aux équipements du véhicule, via un réseau de bord du véhicule.

De plus, le procédé peut comporter une étape de calcul, effectuée par l'unité de gestion de puissance dudit au moins un groupe électrique, d'une valeur de puissance électrique disponible pour alimenter la machine électrique et d'une valeur de puissance mécanique d'entraînement instantanée générée par la machine électrique, en fonction de la consigne de couple et dudit au moins un paramètre dudit au moins un groupe électrique, ainsi qu'une transmission, par l'unité de gestion de puissance au contrôleur du moteur thermique, de cette valeur de puissance mécanique d'entraînement instantanée générée par la machine électrique.

De la sorte, le contrôleur du moteur thermique peut adapter la puissance mécanique fournie par le moteur thermique en complément de la puissance mécanique d'entraînement fournie par la machine électrique.

La valeur de puissance électrique disponible pour alimenter la machine électrique est calculée en fonction de ladite au moins une première caractéristique de la source d'énergie électrique, par exemple son niveau de charge et sa température, en définissant éventuellement l'intensité électrique maximale du courant électrique que peut délivrer la source d'énergie électrique. La valeur de puissance mécanique d'entraînement instantanée générée par la machine électrique est ensuite définie en fonction de la valeur de puissance électrique disponible afin que la machine électrique délivre un couple moteur conforme à la consigne de couple. Le couple moteur maximal que peut délivrer la machine électrique dans ces conditions est directement proportionnel à l'intensité électrique maximale du courant électrique que peut lui fournir la source d'énergie électrique.

Selon une autre possibilité compatible avec les précédentes, le procédé peut comporter une étape de surveillance dudit au moins un groupe électrique par l'intermédiaire de l'unité de gestion de puissance, et à l'aide des capteurs dudit au moins un groupe électrique afin de surveiller une vitesse de rotation et un couple moteur de la machine électrique, ainsi qu'une intensité électrique d'un courant électrique circulant dans ledit au moins un groupe électrique, respectivement par rapport à des valeurs limites.

La vitesse de rotation et le couple moteur de la machine électrique sont par exemple mesurés sur un arbre de la machine électrique, par des capteurs, et définis par rapport à un carter de la machine électrique. L'intensité électrique du courant électrique circulant dans ledit au moins un groupe électrique peut être mesurée à une borne d'entrée de la machine électrique, à une borne de sortie de la source d'énergie électrique ou encore sur un circuit électrique dudit groupe électrique, et notamment entre la machine électrique et la source d'énergie électrique.

Au cours de cette étape de surveillance, la vitesse de rotation et le couple moteur de la machine électrique ainsi que l'intensité électrique du courant électrique circulant dans ledit au moins un groupe électrique peuvent être comparés à des valeurs limites prédéterminées, éventuellement variables en fonction dudit au moins un paramètre dudit groupe électrique, par exemple la température et/ou le vieillissement. En cas de dépassement d'une de ces valeurs limites, ladite au moins une consigne de fonctionnement dudit au moins un groupe électrique peut être réduite afin de respecter ces valeurs limites. Cette étape de surveillance a pour but d'éviter une dégradation dudit au moins un groupe électrique, en particulier de la machine électrique et de la source d'énergie électrique.

Selon une autre possibilité compatible avec les précédentes, le procédé peut comporter une étape d'alimentation électrique d'un réseau de bord du véhicule, via un convertisseur électrique que comporte ledit au moins un groupe électrique. Ce convertisseur électrique est relié électriquement à la source d'énergie électrique et au réseau de bord. Ce convertisseur électrique permet ainsi de transformer le courant électrique fourni par la source d'énergie électrique afin d'alimenter électriquement le réseau de bord du véhicule. Le convertisseur électrique peut ainsi modifier la valeur de la tension électrique et/ou de l'intensité électrique de ce courant électrique afin d'alimenter le réseau de bord. Le convertisseur électrique peut aussi transformer un courant électrique continu en un courant électrique alternatif, et inversement.

Ce convertisseur électrique peut aussi être relié électriquement au dispositif de commande, en complément des liaisons électrique avec la source d'énergie électrique et le réseau de bord. Le convertisseur électrique peut alors transformer le courant électrique fourni par la machine électrique afin d'alimenter électriquement le réseau de bord du véhicule.

La présente invention a aussi pour objet une installation motrice hybride pour un véhicule, l'installation motrice hybride appliquant le procédé tel que précédemment décrit.

Une telle installation motrice hybride comporte un unique moteur thermique, une boîte de transmission de puissance, un contrôleur du moteur thermique, et au moins un groupe électrique. Cet au moins un groupe électrique comporte une machine électrique, une source d'énergie électrique, un dispositif de commande de la machine électrique relié électriquement à ladite machine électrique et à la source d'énergie électrique, une unité de gestion de puissance, ainsi que des capteurs destinés à surveiller la source d'énergie électrique et la machine électrique.

Le moteur thermique et la machine électrique dudit au moins un groupe électrique sont connectés mécaniquement respectivement à des arbres d'entrée de la boîte de transmission de puissance. L'installation motrice hybride peut comporter un calculateur configuré pour mettre en oeuvre le procédé précédemment décrit.

Ledit au moins un groupe électrique peut également comporter un convertisseur électrique relié électriquement à la source d'énergie électrique et à un réseau de bord du véhicule, voire au dispositif de commande pour alimenter électriquement le réseau de bord avec la source d'énergie électrique et/ou la machine électrique.

La présente invention vise enfin un véhicule comportant une installation motrice hybride telle que précédemment décrite et un dispositif de déplacement connecté mécaniquement à un arbre de sortie de ladite boîte de transmission de puissance. Ce véhicule peut par exemple être un aéronef ou un giravion, et le dispositif de déplacement peut comporter un ou plusieurs rotors, tel qu'un rotor de sustentation et/ou une ou plusieurs hélices.

L'invention et ses avantages apparaîtront avec plus de détails dans le cadre de la description qui suit avec des exemples donnés à titre illustratif en référence aux figures annexées qui représentent :
- la figure 1, une vue d'une installation motrice selon l'invention,
- la figure 2, un schéma synoptique d'un procédé selon l'invention, et
- la figure 3, une vue d'un aéronef appliquant le procédé selon l'invention.

Les éléments présents dans plusieurs figures distinctes sont affectés d'une seule et même référence.

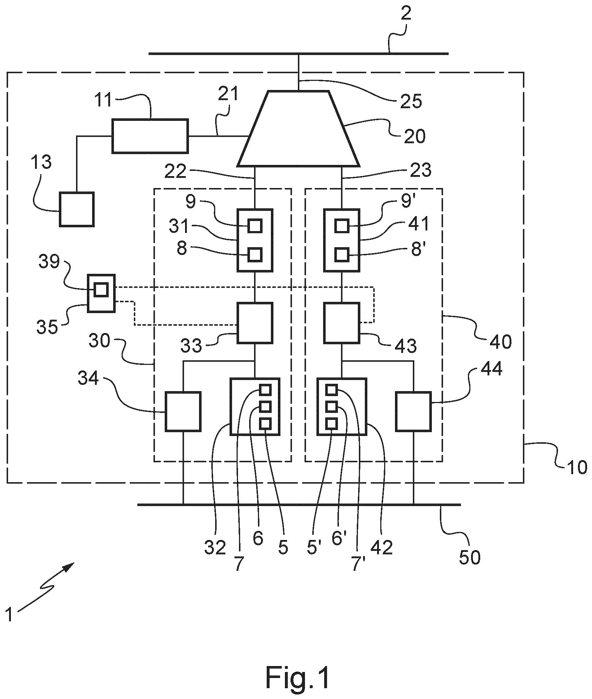

La figure 1 représente une installation motrice hybride 10 munie d'un unique moteur thermique 11, d'une boîte de transmission de puissance 20, d'un contrôleur 13 pour piloter le moteur thermique 11, d'au moins un groupe électrique 30,40 et d'une unité de gestion de puissance 35. Cette installation motrice hybride 10 est destinée à équiper un véhicule 1 pour entraîner en rotation un dispositif de déplacement 2. Selon l'exemple représenté sur la figure 1, le véhicule 1 peut être un aéronef ou un giravion dont le dispositif de déplacement 2 comporte un rotor de sustentation. Alternativement ou de façon complémentaire, le dispositif de déplacement 2 peut comporter une ou plusieurs hélices.

Selon l'exemple représenté sur la figure 1, l'installation motrice hybride 10 comporte deux groupes électriques 30,40. Alternativement, une installation motrice hybride 10 selon l'invention peut comporter un seul groupe électrique ou plus de deux groupes électriques.

Un tel groupe électrique 30,40 comporte une machine électrique 31,41, une source 32,42 d'énergie électrique, un dispositif de commande 33,43 commandant la machine électrique 31,41, ainsi que des capteurs 5,5',6,6',7,7',8,8',9,9'. Le dispositif de commande 33,43 de la machine électrique 31,41 est relié électriquement à ladite machine électrique 31,41 et à la source 32,42 d'énergie électrique, et permet de gérer le fonctionnement de la machine électrique 31,41 et de transmettre un courant électrique entre la machine électrique 31,41 et la source 32,42 d'énergie électrique.

La source d'énergie électrique 32,42 peut comporter par exemple une ou plusieurs batteries électriques rechargeables et/ou une ou plusieurs supercapacités.

L'unité de gestion de puissance 35 permet de gérer la puissance globale dans l'installation motrice hybride 10, et en particulier de répartir le besoin de puissance globale entre le moteur thermique 11 et le ou les groupes électriques 30,40. En cas de plusieurs groupes électriques 30,40, l'unité de gestion de puissance 35 permet en particulier de répartir le besoin de puissance globale entre les machines électriques 31,41 des différents groupes électriques 30,40.

L'unité de gestion de puissance 35 peut être dédiée à la gestion de l'installation motrice hybride 10, ou être partagé pour réaliser d'autres fonctions du véhicule 1. L'unité de gestion de puissance 35 peut être, par exemple, intégrée à un calculateur d'un système avionique du véhicule 1 lorsque celui est un aéronef.

Dans tous les cas, l'unité de gestion de puissance 35 est relié par voie filaire ou non filaire au contrôleur 13, au dispositif de commande 33,43 de la machine électrique 31,41, et aux capteurs.

Le moteur thermique 11 et la machine électrique 31,41 de chaque groupe électrique 30,40, aussi bien en présence d'un unique groupe électrique 30 que de plusieurs groupes électriques 30,40, sont connectés mécaniquement respectivement à des arbres d'entrée 21,22,23 de la boîte de transmission de puissance 20. Le dispositif de déplacement 2 est connecté par une chaîne de transmission mécanique à un arbre de sortie 25 de cette boîte de transmission de puissance 20. De la sorte, le moteur thermique 11 et la machine électrique 31,41 permettent, via la boîte de transmission de puissance 20, d'entraîner en rotation le dispositif de déplacement 2.

Un tel groupe électrique 30,40 peut également comporter un convertisseur électrique 34,44 relié électriquement à la source 32,42 d'énergie électrique et à un réseau de bord 50 du véhicule 1. Ce convertisseur électrique 34,44 peut transformer un courant électrique continu en un courant électrique alternatif ou en un autre courant électrique continu, et inversement, et peut également modifier les valeurs de son intensité électrique et/ou de sa tension électrique. Le convertisseur électrique 34,44 permet ainsi de transformer le courant électrique fourni par la source 32,42 d'énergie électrique afin d'alimenter électriquement le réseau de bord 50.

La machine électrique 31,41 peut fonctionner en mode moteur pour transformer une énergie électrique fournie par la source 32,42, via le dispositif de commande 33,43, en énergie mécanique transmise à l'arbre d'entrée 21,22,23 de la boîte de transmission de puissance 20. La machine électrique 31,41 peut également fonctionner en mode générateur pour transformer une énergie mécanique fournie par le moteur thermique 11 et/ou le dispositif de déplacement 2, via la boîte de transmission de puissance 20, en énergie électrique destinée à recharger la source 32,42 d'énergie électrique, via le dispositif de commande 33,43, et éventuellement alimenter le réseau de bord 50 du véhicule 1, via le convertisseur électrique 34,44.

Les capteurs 5,5',6,6',7,7',8,8',9,9' d'un groupe électrique mesurent un ou plusieurs paramètres ou caractéristiques de ce groupe électrique 30,40. Les capteurs 5,5',6,6',7,7',8,8',9,9' peuvent notamment être agencés respectivement sur ou dans la source 32,42 d'énergie électrique pour mesurer la ou les première caractéristiques de la source 32,42 d'énergie électrique, et sur ou dans ladite machine électrique 31,41 pour mesurer la ou les deuxièmes caractéristiques de la machine électrique 31,41.

Un tel capteur peut fournir un signal brut porteur de mesures brutes réalisées par ce capteur. Un tel capteur peut aussi comporter un calculateur intégré afin de traiter ces mesures brutes, par exemple via un filtrage ou un échantillonnage usuel, voire l'application de transformations, et fournir un signal traité porteur de ces mesures brutes ainsi traitées.

Par exemple, une source 32,42 d'énergie électrique peut comporter un capteur de température 5,5', éventuellement muni d'un thermocouple, pour mesurer une température interne de la source 32,42 d'énergie électrique.

Selon un autre exemple, une source 32,42 d'énergie électrique peut comporter un capteur de charge 6,6' permettant de mesurer un niveau de charge électrique de la source 32,42 d'énergie électrique, à savoir la quantité d'énergie électrique qu'elle comporte.

Selon un autre exemple, une source 32,42 d'énergie électrique peut comporter un capteur de vieillissement 7,7' pour mesurer un niveau de vieillissement de la source 32,42 d'énergie électrique. Un tel capteur de vieillissement peut par exemple effectuer un calcul du niveau de vieillissement de la source d'énergie électrique 32,42 en fonction de paramètres internes, tels que sa résistance interne et son niveau de charge par exemple. Le niveau de vieillissement peut être pris en compte pour déterminer la valeur de l'intensité électrique maximale du courant électrique que peut fournir cette source d'énergie électrique 32,42. Le niveau de vieillissement permet ainsi de déterminer la diminution de la capacité de la source d'énergie électrique 32,42 à fournir une énergie électrique ou une puissance électrique en fonction de son utilisation dans le temps.

Selon un autre exemple, une machine électrique 31,41 peut comporter un capteur de température 8,8', éventuellement muni d'un thermocouple, pour mesurer une température interne de la machine électrique 31,41. Une machine électrique 31,41 peut comporter un capteur de couple 9, éventuellement muni d'un couplemètre, pour mesurer un couple moteur de la machine électrique 31,41.

L'installation motrice hybride 10 comporte également un calculateur 39 hébergé par l'unité de gestion de puissance 35 comme représenté sur la figure 1. Le calculateur 39 peut comprendre par exemple au moins un processeur et au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue sous l'acronyme DSP, un microcontrôleur... Le calculateur 39 est ainsi relié par voie filaire ou non filaire au contrôleur 13, au dispositif de commande 33,43 de la machine électrique 31,41, et aux capteurs 5,5',6,6',7,7',8,8',9,9'.

Dans tous les cas, des signaux, électriques ou optiques, analogiques ou numériques, sont échangés entre, d'une part, le calculateur 39 et, d'autre part, le contrôleur 13, le dispositif de commande 33,43 de la machine électrique 31,41, et les capteurs, voire le cas échéant l'unité de gestion de puissance 35.

De plus, des instructions ou un programme d'ordinateur peuvent être stockés dans une mémoire du calculateur 39 ou dans une mémoire reliée à ce calculateur 39. Le calculateur 39 peut alors exécuter ces instructions ou ce programme pour mettre en oeuvre un procédé de pilotage de l'installation motrice 10.

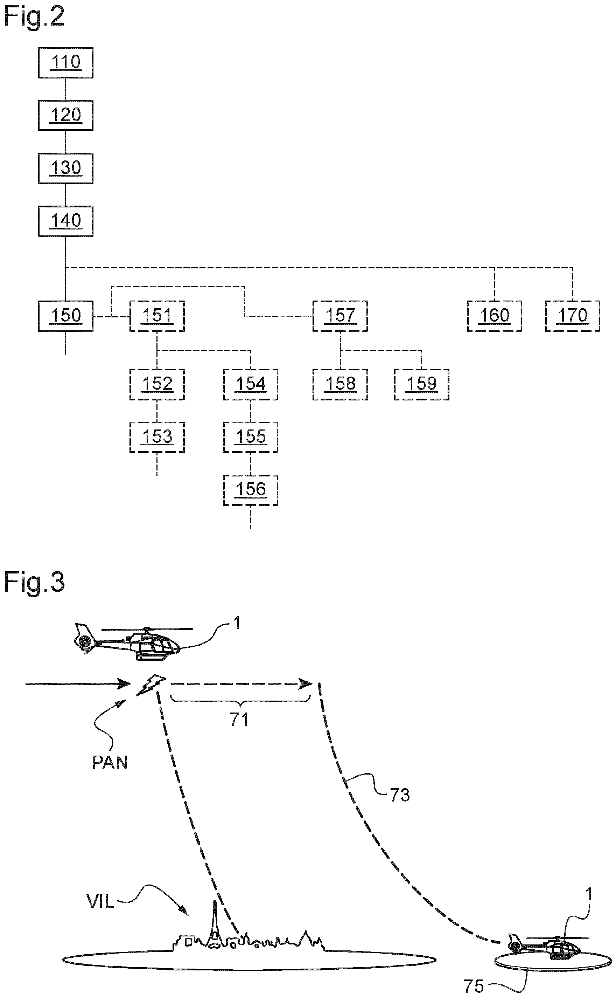

La figure 2 représente un schéma synoptique de ce procédé de pilotage de l'installation motrice hybride 10. Ce procédé peut comporter les étapes suivantes.

Tout d'abord, le procédé comporte une acquisition 110 d'au moins un paramètre dudit au moins un groupe électrique 30,40, réalisée par l'intermédiaire des capteurs.

De la sorte, une ou plusieurs premières caractéristiques relatives à la source 32,42 d'énergie électrique et une ou plusieurs deuxièmes caractéristiques relatives à la machine électrique 31,41 sont acquises. Des signaux porteurs de ces paramètres sont, par exemple, transmis par les capteurs au calculateur 39 ou à la mémoire.

Les premières caractéristiques de la source 32,42 d'énergie électrique acquises lors de cette étape d'acquisition 110 peuvent permettre de définir l'état courant de la source 32,42 d'énergie électrique, et d'en déduire la capacité énergétique de la source 32,42 à fournir de l'énergie électrique, la quantité d'énergie électrique que la source 32,42 peut fournir, et par exemple l'intensité électrique maximale du courant électrique que la source 32,42 peut délivrer. Cet état courant de la source 32,42 d'énergie électrique, sa capacité énergétique, sa quantité d'énergie électrique, et l'intensité électrique maximale du courant électrique délivré ou reçu par la source 32,42 d'énergie électrique peuvent être déterminés à partir d'algorithmes connus en fonction d'une ou de plusieurs premières caractéristiques et mis en oeuvre par un système de gestion de la source 32,42 d'énergie électrique et désigné par l'acronyme BMS pour « *Battery management système* ».

Les secondes caractéristiques de la machine électrique 31,41 acquises lors de cette étape d'acquisition 110 peuvent aussi permettre de définir la quantité d'énergie électrique que peut utiliser la machine électrique 31,41 et d'en déduire la puissance mécanique que peut délivrer la machine électrique 31,41 en mode moteur ainsi que l'énergie électrique que la machine électrique 31,41 peut fournir en mode générateur. Cette quantité d'énergie électrique que peut utiliser la machine électrique 31,41 ainsi que la puissance mécanique que peut délivrer la machine électrique 31,41 en mode moteur et l'énergie électrique que la machine électrique 31,41 peut fournir en mode générateur sont définies lors de la conception de la machine électrique 31,41 et peuvent être mises sous forme d'abaques, de lois mathématiques ou de modèles en fonction d'une ou plusieurs secondes caractéristiques.

Suite à cette acquisition 110, le procédé comporte une réception 120 par l'unité de gestion de puissance 35 d'un besoin en puissance mécanique du véhicule 1. Ce besoin de puissance peut être déterminé de façon usuelle par un calculateur particulier du véhicule 1, tel qu'un calculateur d'un système avionique du véhicule 1 lorsque celui est un aéronef, ou par un dispositif dédié du véhicule 1. Un signal porteur de cette information est alors transmis à l'unité de gestion de puissance 35.

Lorsque le véhicule 1 est un giravion muni d'un rotor principal, ce besoin en puissance mécanique est par exemple déterminé à l'aide de lois mathématiques, de modèles et/ou d'abaques, en fonction de la masse du giravion, de sa vitesse d'avancement, de son altitude, de sa vitesse verticale et des valeurs de la position d'un levier de commande de pas collectif de pales du rotor principal 2, voire de la position d'un levier de pas cyclique de ces pales du rotor principal 2. Ces lois mathématiques, modèles et/ou abaques sont par exemple stockée dans une mémoire du calculateur 39 ou dans une mémoire reliée à ce calculateur 39. La masse initiale du véhicule 1 est par exemple stockée dans une mémoire et le système avionique du véhicule peut déterminer la masse courante du véhicule en déduisant de la masse initiale la quantité de carburant consommé depuis le décollage du véhicule 1. Des capteurs dédiés peuvent fournir la vitesse d'avancement, l'altitude et la vitesse verticale du véhicule 1. Enfin des capteurs positionnés sur les leviers de commande de pas permettre de connaître les valeurs des commande correspondantes.

Ensuite, le procédé comporte une détermination 130 d'une puissance électrique exploitable pouvant être utilisée par ledit au moins un groupe électrique 30,40, effectuée par le calculateur 39 ou l'unité de gestion de puissance 35, en fonction du ou des paramètres de ce groupe électrique 30,40 et du besoin en puissance mécanique du véhicule 1.

Cette puissance électrique exploitable peut être positive ou négative. Selon une hypothèse de signe prise ici, une puissance électrique exploitable positive signifie que ledit au moins un groupe électrique 30,40 est capable de générer une énergie mécanique à l'aide de la machine électrique 31,41 alimentée électriquement par la source 32,42. A contrario, une puissance électrique exploitable négative signifie que ce groupe électrique 30,40 est capable de générer une énergie électrique à l'aide de la machine électrique 31,41 entraînée en rotation par le moteur thermique 11 et/ou par le dispositif de propulsion, via la boîte de transmission de puissance 20.

Une hypothèse de signe différent peut aussi être prise, inversant alors la signification d'une puissance électrique exploitable positive ou négative.

Le procédé comporte aussi un établissement 140 d'au moins une consigne de fonctionnement pour ledit au moins un groupe électrique 30,40, cette consigne de fonctionnement étant établie par l'unité de gestion de puissance 35, en fonction de la puissance électrique exploitable, du ou des paramètres de ce groupe électrique 30,40 et du besoin en puissance mécanique.

Cette consigne de fonctionnement peut être établie de plus en fonction d'une consommation de courant électrique du véhicule 1, via le réseau de bord 50. Ce courant électrique consommé par le véhicule 1, et en particulier par les équipements électriques de ce véhicule 1, est fourni au réseau de bord 50 par ledit au moins un groupe électrique 30,40, soit par la machine électrique 31,41 fonctionnant en mode générateur, soit par la source 32,42 d'énergie électrique lorsque son niveau de charge le permet. Un dispositif de mesure, positionné par exemple sur le réseau de bord 50, permet de déterminer l'intensité électrique et/ou la tension électrique de ce courant électrique consommé. Ces équipements électriques comportent par exemple, un système de climatisation, des écrans, un système de radiocommunication, des phares, des pompes hydrauliques... Un signal porteur de la consigne de fonctionnement est transmis au dispositif de commande 33,43 par l'unité de gestion de puissance 35.

Lorsque ladite puissance électrique exploitable est négative, la consigne de fonctionnement comporte une consigne d'intensité électrique maximale de recharge pour un courant électrique de recharge susceptible d'alimenter la source 32,42 d'énergie électrique.

Lorsque ladite puissance électrique exploitable est positive, la consigne de fonctionnement comporte une consigne de couple susceptible d'être transmis par la machine électrique 31,41 à l'arbre d'entrée 21,22,23 de la boîte de transmission de puissance 20.

Puis, le procédé comporte une commande 150 du moteur thermique 11 et dudit au moins un groupe électrique 30,40 réalisée par l'intermédiaire respectivement du contrôleur 13 et du dispositif de commande 33,43 en fonction de la consigne de fonctionnement, du ou des paramètres de ce groupe électrique 30,40 et du besoin en puissance mécanique du véhicule 1.

Ainsi, lorsque la puissance électrique exploitable est négative, la commande 150 comporte une étape de recharge électrique 151 de la source 32,42 d'énergie électrique dudit au moins un groupe électrique 30,40 avec un courant électrique de recharge généré par la machine électrique 31,41. La machine électrique 31,41 est alors entraînée en rotation par l'arbre d'entrée 21,22,23 de la boîte de transmission principale de puissance 20, qui lui transmet une énergie mécanique fournie par le moteur thermique 11 et/ou le dispositif de déplacement 2. La machine électrique 31,41 délivre alors un courant électrique dont l'intensité électrique est inférieure ou égale à la consigne d'intensité électrique maximale de recharge, et qui alimente la source 32,42 d'énergie électrique pour la recharger électriquement. Une partie de ce courant électrique délivré par la machine électrique 31,41 peut éventuellement alimenter également le réseau de bord 50 si besoin.

Le procédé selon l'invention peut aussi comporter une vérification 152, réalisée par l'unité de gestion de puissance 35, que cette consigne d'intensité électrique maximale de recharge est compatible avec le ou les paramètres du ou des groupes électriques 30,40. Lorsque cette consigne d'intensité électrique maximale de recharge est effectivement incompatible avec le ou les paramètres, une limitation 153 est réalisée par l'unité de gestion de puissance 35, afin de modifier et de réduire cette consigne d'intensité électrique maximale de recharge.

La limitation de la consigne peut être réalisée par une fonction limitation de l'unité de gestion de puissance 35, par exemple en temps réel. En outre, cette fonction limitation peut être indépendante des autres fonctions de l'unité de gestion de puissance 35, de manière à éviter qu'une panne ou erreur commune à la fonction de gestion de puissance et à la fonction de limitation ne mène à un dépassement intempestif de limites.

De plus, le procédé selon l'invention peut aussi comporter les étapes complémentaires suivantes :
i. une première détermination 154, réalisée par l'unité de gestion de puissance 35, d'une valeur limite de puissance mécanique admissible par la machine électrique 31,41 en fonction de la consigne d'intensité électrique maximale de recharge,
ii. une seconde détermination 155, réalisée par l'unité de gestion de puissance 35, d'une valeur de puissance mécanique de charge instantanée que doit générer le moteur thermique 11 en fonction de la valeur limite de puissance mécanique admissible et du besoin en puissance du véhicule 1, et
iii. une transmission 156, réalisée par l'unité de gestion de puissance 35, vers le contrôleur 13 du moteur thermique 11, de cette valeur de puissance mécanique de charge instantanée que doit générer le moteur thermique 11.

De la sorte, le contrôleur 13 peut piloter le moteur thermique 11 afin qu'il fournisse une puissance mécanique suffisante à la boîte de transmission de puissance 20 pour, d'une part, assurer la propulsion du véhicule 1, via le dispositif de déplacement 2 et, d'autre part, recharger la source 32,42 d'énergie électrique.

En outre, lorsque la puissance électrique exploitable est positive, ladite commande 150 comporte une génération 157 d'une puissance mécanique par ledit au moins un groupe électrique 30,40. La machine électrique 31,41 de ce ou ces groupes électriques 30,40 est alors alimentée électriquement par la source 32,42 afin de fournir un couple moteur à l'arbre d'entrée 21,22,23 de la boîte de transmission de puissance 20 pour entraîner en rotation le dispositif de déplacement 2 du véhicule 1.

De la sorte, la machine électrique 31,41 peut fournir cette puissance mécanique conjointement à la puissance mécanique fournie par le moteur thermique 11 pour entraîner en rotation le dispositif de déplacement 2 via la boîte de transmission de puissance 20 lorsque le niveau de charge de la source 32,42 d'énergie électrique le permet. Un tel fonctionnement de l'installation motrice hybride 10 permet notamment d'améliorer le rendement ou les performances du véhicule 1, afin par exemple de réaliser une manoeuvre exigeante, de réduire sa consommation de carburant ou de limiter l'émission de pollution.

La machine électrique 31,41 peut fournir cette puissance mécanique en cas de panne du moteur thermique 11 et permettre au véhicule de poursuivre sa route. Un tel fonctionnement, dans le cas où le véhicule est un giravion, est représenté sur la figure 3.

Lorsqu'une panne PAN du moteur thermique 11 survient au-dessus d'une zone urbaine VIL, ledit au moins un groupe électrique 30,40, via la machine électrique 31,41, entraîne seul en rotation le dispositif de déplacement 2 via la boîte de transmission de puissance 20 pour permettre au véhicule 1 de s'éloigner de la zone urbaine VIL pendant un vol 71. Une fois que le véhicule 1 ne survole plus la zone urbaine VIL, le véhicule 1 peut entamer un vol d'approche 73 d'une aire d'atterrissage 75 pour atteindre cette aire d'atterrissage 75 en sécurité.

L'installation motrice hybride 10 permet ainsi d'augmenter la sureté de l'utilisation du véhicule 1, notamment la sécurité du vol dans le cas d'un aéronef, pour augmenter ses capacités de vol, suite à une panne du moteur thermique 11.

De plus, le procédé selon l'invention peut comporter un calcul 158, réalisée par l'unité de gestion de puissance 35, d'une valeur de puissance électrique disponible au niveau de la source 32,42 d'énergie électrique pour alimenter la machine électrique 31,41 et d'une valeur de puissance mécanique instantanée générée par la machine électrique 31,41 en fonction de la consigne de couple, du ou des paramètres dudit au moins un groupe électrique 30,40 et de cette valeur de puissance électrique disponible. Ensuite une étape de transmission 159 est réalisée par l'unité de gestion de puissance 35 pour transmettre au contrôleur 13 cette valeur de puissance mécanique instantanée générée par la machine électrique 31,41, sous la forme d'un signal porteur d'une telle information.

Ainsi, lorsque le moteur thermique 11 n'est pas en panne, il peut fournir une puissance complémentaire nécessaire et suffisante à la puissance mécanique instantanée générée par la machine électrique 31,41 pour que le moteur thermique 11 et la machine électrique 31,41 entraînent conjointement en rotation le dispositif de déplacement 2.

En outre, et quelle que soit la valeur de la puissance électrique exploitable, le procédé selon l'invention peut comporter une étape de surveillance 160 dudit au moins un groupe électrique 30,40, réalisée par l'unité de gestion de puissance 35 et à l'aide desdits capteurs, pour surveiller une vitesse de rotation et un couple moteur de ladite machine électrique 31,41, ainsi qu'une intensité électrique d'un courant électrique circulant dans ce groupe électrique 30,40 respectivement par rapport à des valeurs limites. En cas de dépassement d'une valeur limite, l'unité de gestion de puissance 35 permet, grâce par exemple à une fonction de surveillance, de limiter la valeur de consigne correspondante.

Enfin, et toujours quelle que soit la valeur de la puissance électrique exploitable, le procédé selon l'invention peut comporter une étape d'alimentation électrique 170 d'un réseau de bord 50 du véhicule 1, via le convertisseur électrique 34,44 dudit au moins un groupe électrique 30,40.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé de pilotage d'une installation motrice hybride (10) pour la propulsion d'un véhicule (1), ledit véhicule (1) comportant :
- une installation motrice hybride (10) munie d'un unique moteur thermique (11), d'une boîte de transmission de puissance (20), d'un contrôleur (13) dudit moteur thermique (11), d'au moins un groupe électrique (30,40) et une unité de gestion de puissance (35,45), ledit au moins un groupe électrique (30,40) comprenant une machine électrique (31,41), une source (32,42) d'énergie électrique, un dispositif de commande (33,43) de ladite machine électrique (31,41) relié électriquement à ladite machine électrique (31,41) et à ladite source (32,42) d'énergie électrique, ainsi que des capteurs (5,5',6,6',7,7',8,8',9,9'), ledit moteur thermique (11) et ledit au moins un groupe électrique (30,40) étant connectés mécaniquement respectivement à des arbres d'entrée (21,22,23) de ladite boîte de transmission de puissance (20), et
- un dispositif de déplacement (2) connecté par une chaîne de transmission mécanique à un arbre de sortie (25) de ladite boîte de transmission de puissance (20),
**caractérisé en ce que** ledit procédé comporte les étapes suivantes :
- acquisition (110) d'au moins un paramètre dudit au moins un groupe électrique (30,40) par l'intermédiaire desdits capteurs (5, 5', 6, 6', 7, 7', 8, 8', 9, 9'),
- réception (120) d'un besoin en puissance mécanique dudit véhicule (1) par ladite unité de gestion de puissance (35),
- détermination (130) d'une puissance électrique exploitable pouvant être utilisée par ledit au moins un groupe électrique (30,40), en fonction dudit au moins un paramètre et dudit besoin en puissance mécanique dudit véhicule (1),
- établissement (140) d'au moins une consigne de fonctionnement pour ledit au moins un groupe électrique (30,40) par ladite unité de gestion de puissance (35) en fonction de ladite puissance électrique exploitable, dudit au moins un paramètre et dudit besoin en puissance mécanique, et
- commande (150) dudit moteur thermique (11) et dudit au moins un groupe électrique (30,40) par l'intermédiaire respectivement dudit contrôleur (13) et dudit dispositif de commande (33,43) en fonction de ladite au moins une consigne de fonctionnement, dudit au moins un paramètre et dudit besoin en puissance mécanique.

2. Procédé selon la revendication 1,
dans lequel lorsque ladite puissance électrique exploitable est négative, ladite commande (150) comporte une recharge électrique (151) de ladite source (32,42) d'énergie électrique dudit au moins un groupe électrique (30,40) avec un courant électrique de recharge généré par ladite machine électrique (31,41) dudit au moins un groupe électrique (30,40), ladite machine électrique (31,41) étant entraînée en rotation par ledit arbre d'entrée (21,22,23) de ladite boîte de transmission de puissance (20), et ladite au moins une consigne de fonctionnement pour ledit au moins un groupe électrique (30,40) comporte une consigne d'intensité électrique maximale de recharge pour ledit courant électrique de recharge.

3. Procédé selon la revendication 2,
dans lequel ladite consigne d'intensité électrique maximale de recharge est également établie en fonction d'une consommation de courant électrique par ledit véhicule (1), ledit courant électrique consommé par ledit véhicule (1) étant fourni par ledit au moins un groupe électrique (30,40).

4. Procédé selon l'une quelconque des revendications 2 à 3,
dans lequel ledit procédé comporte une vérification (152) par ladite unité de gestion de puissance (35) que ladite consigne d'intensité électrique maximale de recharge est compatible avec ledit au moins un paramètre, et lorsque ladite consigne d'intensité électrique maximale de recharge est incompatible avec ledit au moins un paramètre, une limitation (153) de ladite consigne d'intensité électrique maximale de recharge est réalisée.

5. Procédé selon l'une quelconque des revendications 2 à 4,
dans lequel ledit procédé comporte : i) une première détermination (154), par ladite unité de gestion de puissance (35) dudit au moins un groupe électrique (30,40), d'une valeur limite de puissance mécanique admissible par ladite machine électrique (31,41) en fonction de ladite consigne d'intensité électrique maximale de recharge, ii) une seconde détermination (155), par ladite unité de gestion de puissance (35) d'une valeur de puissance mécanique de charge instantanée que doit générer ledit moteur thermique (11) en fonction de ladite valeur limite de puissance mécanique admissible et dudit besoin en puissance du véhicule (1), iii) une transmission (156), par ladite unité de gestion de puissance (35) audit contrôleur (13) dudit moteur thermique (11), de ladite valeur de puissance mécanique de charge instantanée que doit générer ledit moteur thermique (11).

6. Procédé selon l'une quelconque des revendications 1 à 5,
dans lequel lorsque ladite puissance électrique exploitable est positive, ladite commande (150) comporte une génération (157) d'une puissance mécanique par ledit au moins un groupe électrique (30,40), ladite machine électrique (31,41) dudit au moins un groupe électrique (30,40) étant alimentée électriquement par ladite source (31,41) dudit au moins un groupe électrique (30,40), et ladite au moins une consigne de fonctionnement pour ledit au moins un groupe électrique (30,40) comporte une consigne de couple pour ladite machine électrique (31,41).

7. Procédé selon la revendication 6,
dans lequel ladite consigne de couple est également établie en fonction d'une consommation de courant électrique par ledit véhicule (1), ledit courant électrique consommé par ledit véhicule (1) étant fourni par ledit au moins un groupe électrique (30,40).

8. Procédé selon l'une quelconque des revendications 6 à 7,
dans lequel ledit procédé comporte un calcul (158), par ladite unité de gestion de puissance (35) dudit au moins un groupe électrique (30,40), d'une valeur de puissance électrique disponible pour alimenter ladite machine électrique (31,41) et d'une valeur de puissance mécanique instantanée générée par ladite machine électrique (31,41) en fonction de ladite consigne de couple et dudit au moins un paramètre dudit au moins un groupe électrique (30,40), et une transmission (159), par ladite unité de gestion de puissance (35) audit contrôleur (13) dudit moteur thermique (11), de ladite valeur de puissance mécanique instantanée générée par ladite machine électrique (31,41).

9. Procédé selon l'une quelconque des revendications 1 à 8,
dans lequel ledit procédé comporte une surveillance (160) dudit au moins un groupe électrique (30,40), par ladite unité de gestion de puissance (35) et à l'aide desdits capteurs, pour surveiller une vitesse de rotation et un couple moteur de ladite machine électrique (31,41), ainsi qu'une intensité électrique d'un courant électrique circulant dans ledit au moins un groupe électrique (30,40) respectivement par rapport à des valeurs limites.

10. Procédé selon l'une quelconque des revendications 1 à 9,
dans lequel ledit au moins un paramètre dudit au moins un groupe électrique (30,40) comporte au moins une première caractéristique de ladite source (32,42) d'énergie électrique et au moins une deuxième caractéristique de ladite machine électrique (31,41).

11. Procédé selon la revendication 10,
dans lequel ladite au moins une première caractéristique de ladite source (32,42) d'énergie électrique est choisie parmi un niveau de charge, une température, et un vieillissement de ladite source (32,42) d'énergie électrique et ladite au moins une seconde caractéristique de ladite machine électrique (31,41) est choisie parmi une température et un couple moteur de ladite machine électrique (31,41).

12. Procédé selon l'une quelconque des revendications 1 à 11,
dans lequel ledit besoin en puissance mécanique dudit véhicule (1) est déterminé en fonction d'une ou de plusieurs des valeurs suivantes :
- une altitude dudit véhicule (1),
- une vitesse d'avancement dudit véhicule (1),
- une vitesse verticale dudit véhicule (1),
- une valeur d'une position d'un levier de commande de pas collectif de pales dudit rotor principal (2), et
- une valeur d'une position d'un levier de commande de pas cyclique de pales dudit rotor principal (2).

13. Procédé selon l'une quelconque des revendications 1 à 12, dans lequel ledit procédé comporte une étape d'alimentation électrique (170) d'un réseau de bord (50) du véhicule (1), via un convertisseur électrique (34,44) dudit au moins un groupe électrique (30,40), ledit convertisseur électrique (34,44) étant relié électriquement à ladite source (32,42) d'énergie électrique et audit réseau de bord (50).

14. Installation motrice hybride (10) destinée à un véhicule (1), ladite installation motrice hybride (10) comportant un unique moteur thermique (11), une boîte de transmission de puissance (20), un contrôleur (13) dudit moteur thermique (11), et au moins un groupe électrique (30,40), ledit au moins un groupe électrique (30,40) comprenant une machine électrique (31,41), une source (32,42) d'énergie électrique, un dispositif de commande (33,43) de ladite machine électrique (31,41) relié électriquement à ladite machine électrique (15,17) et à ladite source (32,42) d'énergie électrique, une unité de gestion de puissance (35), ainsi que des capteurs (5,5',6,6',7,7',8,8',9,9'), ledit moteur thermique (11) et ledit au moins un groupe électrique (30,40) étant connectés mécaniquement respectivement à des arbres d'entrée (21,22,23) de ladite boîte de transmission de puissance (20),
**caractérisée en ce que** ladite installation motrice hybride (10) comporte un calculateur (39) configuré pour mettre en oeuvre le procédé selon l'une quelconque des revendications 1 à 13.

15. Installation motrice hybride (10) selon la revendication 14,
dans lequel ledit au moins un groupe électrique (30,40) comporte au moins un convertisseur électrique (34,44) relié électriquement audit dispositif de commande (33,43), à ladite source (32,42) d'énergie électrique et à un réseau de bord (50) dudit véhicule (1), pour alimenter électriquement ledit réseau de bord (50) avec ladite source (32,42) d'énergie électrique et/ou ladite au moins une machine électrique (31,41).

16. Véhicule (1) comportant une installation motrice hybride (10) et un dispositif de déplacement (2) connecté mécaniquement à un arbre de sortie (25) de ladite boîte de transmission de puissance (20), ladite installation motrice hybride étant selon l'une quelconque des revendications 14 à 15.
